# EUROPEAN PATENT APPLICATION

(11) **EP 4 813 606 A2**
(43) Date of publication of application: **30.09.2026**
(21) Application number: 26199594.8
(22) Date of filing: 12.12.2024
(51) Int. Cl.: B29C 48/88

(54) **METHOD OF MAKING AN EXTRUDED MESH BODY FOR A VEHICLE SEAT AND THE ARTICLE MADE THEREBY**

(30) Priority: 19.12.2023 US 202363612215 P; 18.07.2024 DK PA202470196; 27.11.2024 US 202418962730
(62) Document number(s) of the earlier application(s) in accordance with Art. 76 EPC: 24219413.2 / 4 575 059
(71) Applicant: Lear Corporation, Southfield, MI 48033 (US)
(72) Inventor: REYES, Fernando, 6000 Cebu City (PH); ORNOPIA, Earl Andrei, 6014 Mandaue, Cebu (PH); ALOPE, Michael Kint, 6000 Cebu City (PH); PESTANO, Carlo Suson, 6014 Mandaue City, Cebu (PH)
(74) Representative: Grünecker Patent- und Rechtsanwälte PartG mbB

(57) **Abstract**

A body made up of a plurality of extruded polymer filaments randomly oriented and bonded together to form a three-dimensional mesh structure. The body is elongated in an extrusion, or longitudinal, direction. First zones of the extruded polymer filaments having a first density and second zones of the extruded polymer filaments having a second density less than the first density. The first and second zones are separated by boundaries, or transition areas. A method of making a seat pad with extruded polymer filaments having different zones with different densities and hardness characteristics by controlling the speed of a plurality of tractor belts in a cooling bath.

## Description

### REFERENCE TO RELATED APPLICATIONS

This application claims priority to U.S. patent application Serial No. 18/962,730 filed November 27, 2024 and also claims the benefit of U.S. provisional application Serial No. 63/612,215 filed December 19, 2023. This application also claims priority to Denmark patent application No. PA202470196 filed July 18, 2024. The disclosures of which are incorporated in their entirety by reference herein.

### TECHNICAL FIELD

An extruded body of polymer filaments made according to a method that forms a pad having different densities across the width of the extruded body.

### BRIEF DESCRIPTION OF THE DRAWINGS

FIGURE 1 is a diagrammatic view of a plastic extrusion line.
FIGURE 2 is a elevation view of a variable speed tractor section having a plurality of tractor belts arranged across the extrusion perpendicular to the extrusion direction.
FIGURE 3 is a front elevation view of a seat backrest cushion.
FIGURE 4 is a top plan view of a seat cushion.
FIGURE 5 is a cross section view taken through the extruded preform.
FIGURE 6 is a perspective view of a vehicle seat partially fragmented showing the frame and seat cover.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, *e.g.*, in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

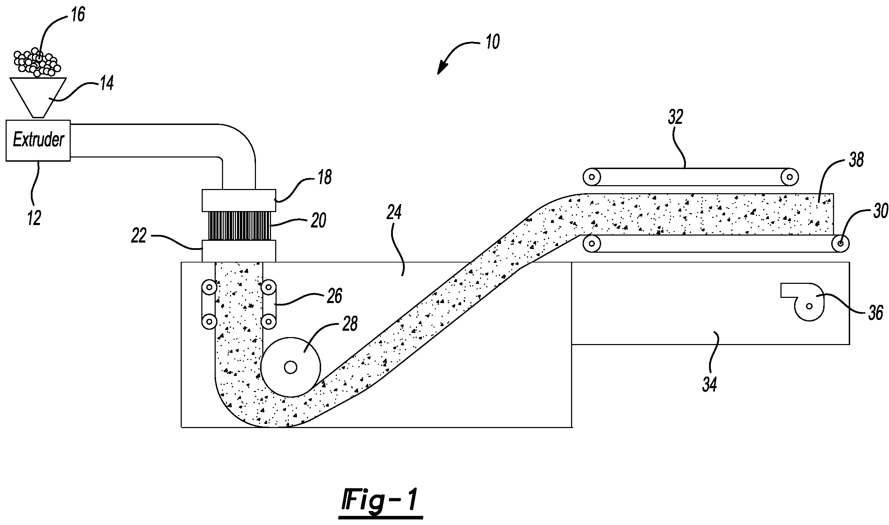

Referring to Figure 1, an extrusion line 10 is illustrated diagrammatically for forming a preform strip 12 of polymer filaments 14. An extruder 12 receives resin beads 16 from a resin hopper 14 that are melted in the extruder 12 and then provided to a die head 22. The die head 22 extrudes the polymer filaments 14 that are then fed through a shaping funnel 24. The shaping funnel 24 deposits the polymer filaments 14 into a cooling tank 26. The polymer filaments 14 are pulled into the cooling tank 26 by a tractor section 28 at a controllable rate of speed. As the preform strip is pulled into the cooling tank 26 the polymer filaments 14 are welded together as they are initially cooled by the water in the cooling tank 26. A roller 30 in the cooling tank 26 pulls the 12 preform strip 12 further into the cooling tank 26. An unload conveyor 32 unloads the preform strip 12 from the cooling tank 26 while a shaker table 34 shakes the preform strip 12 to remove water from the preform strip 12. A return water trough 36 collects the water as it drains from the preform strip 12. A blower 38 is directed over the return water trough 36 to cool the water as it returns to the cooling tank 26.

The polymer filaments 14 comprise strands, fibers, or strips that are welded, glued, or melted and reformed into a three-dimensional mesh structure. The preform strip 12 comprises an intermediate preform for manufacturing a plurality of vehicle seat pads that are subsequently cut into individual seat pads and molded to a predetermined shape.

The polymer resin 18 comprises LLDPE, or HDPE that are provided to the resin hopper 20 in the form of resin beads, ground polymer resin, or the like.

The cooling tank 26 is filled with water or an aqueous coolant solution for polymers.

The tractor section 28 is described below in greater detail pulls the polymer filaments 14 in a longitudinal direction that is the extrusion direction which is the direction that the polymer strands 14 flow from the die head 22 and shaping funnel 24.

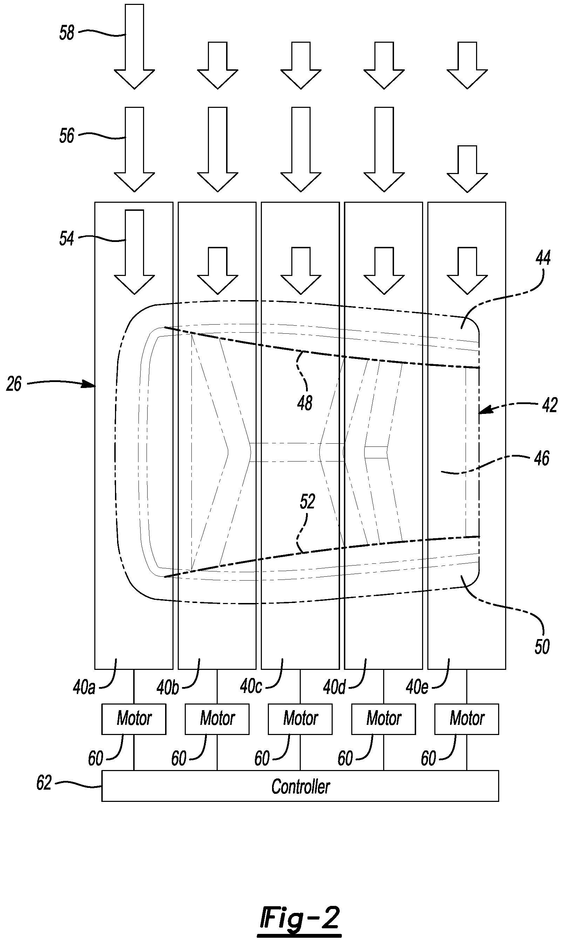

Referring to Figure 2, the tractor section 28 shown in Figure 1 is shown to include a plurality of tractor belts 40a-40e that are controlled to move at a variable speed relative to each other to thereby form zones, or regions, having different hardness characteristics. In Figure 2 a seat base image 42 is super imposed on the view of the tractor belts 40a-40e. The seat base image 42 represents the seat to be formed when the preform strip is cut into discrete seat pad pieces that are then formed in a mold into the shape of the illustrated seat pad.

The seat pad image 42, shown in phantom lines, includes a first hardness zone 44 and a second hardness zone 46. A first boundary 48 is formed between the first hardness zone 44 and the second hardness zone 46. A third hardness zone 50 and the second hardness zone 46 form a second boundary 52 therebetween. As shown in Figure 2, the first boundary 48 and the second boundary 52 are not perpendicular to the longitudinal direction that the belts move, or extrusion direction, but instead converge from the front portion of the seat base image 42 to the rear portion of the seat base image 42.

It should be understood that the boundaries 48 and 52 can be curved or can be disposed in a wide variety of angular orientations relative to the longitudinal direction to provide the desired variation of the hardness profile in predetermined zones, or regions, of the molded seat cushion. The first boundary 48 and the second boundary 52 can extend fully across the preform strip 12 or can extend partially across the preform strip 12. The boundary can alternatively be characterized as a transition area between different hardness zones.

A first speed arrow 54 is shown at the infeed end of the tractor belt section 26 that graphically illustrates the different speeds that the various tractor belts 40a-40e act upon the preform strip 12. The size of the first speed arrows 54 corresponds to the speed that the respective tractor belts are moved.

A second speed arrow 56 is illustrated in Figure 2 above the first speed arrow 54 and represents that at subsequent time the speed of the tractor belts 40e-40e is changed to change the apparent/bulk density locally in the preform strip 12. Similarly, a third speed arrow 58 shown above the second speed arrow 56 in Figure 2 shows that additional speed changes can be made to again vary the apparent/bulk density of the preform strip 12. The length of each speed arrow 52, 54, 56 is varied to indicate the relative speed of the tractor belts 40a-40e changes as the polymer filaments 20 are drawn through the tractor section 26.

The apparent/bulk density of the pad is controlled by the tactor belts 40a-40e. The apparent/bulk density is not the same as filament density which is the density of a single strand. The spacing of the strands is controlled by the speed that the tractor belts 40a-40e pull the strands into the cooling tank 24, or water bath. The apparent/bulk density in a respective zone of the seat base increases as the speed of the tractor conveyor belts 40a-40e decreases. Conversely, the apparent/bulk density in a respective zone of the seat base decreases as the speed of the tractor conveyor belts 40a-40e increases. There is an upper limit on the difference in speed differences on how fast adjacent tractor belts can move. If the speed difference is too great, some of the filaments may become over-stretched or may break, become thin, or lose bonding locations. The extent of apparent/bulk density variations in the cushion is limited but may approach 60% variation from one zone to another.

Motors 60a-60e are variable speed motors controlled by a controller 62. The controller 62. The controller is programmed to change the speed of the motors individually and the movement of the tractor belts 40a-40e to match or correspond to the specified apparent/bulk density of the zones of seat cushion to be manufactured.

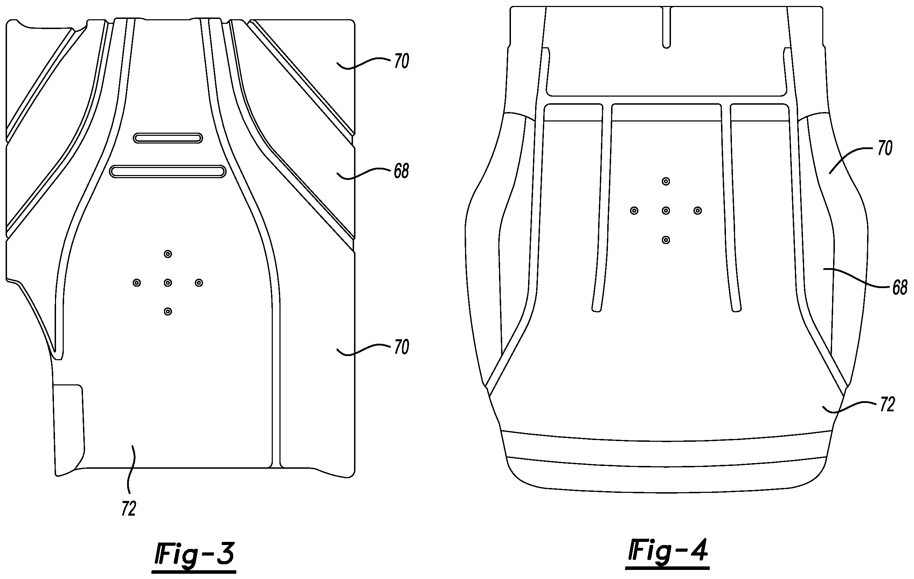

Referring to Figure 3, the preform strip is illustrated in cross section across the width of the preform strip 12 to show the apparent/bulk density variations across the preform strip. Different apparent/bulk densities are illustrated by the relative looseness and compacting in the different zones.

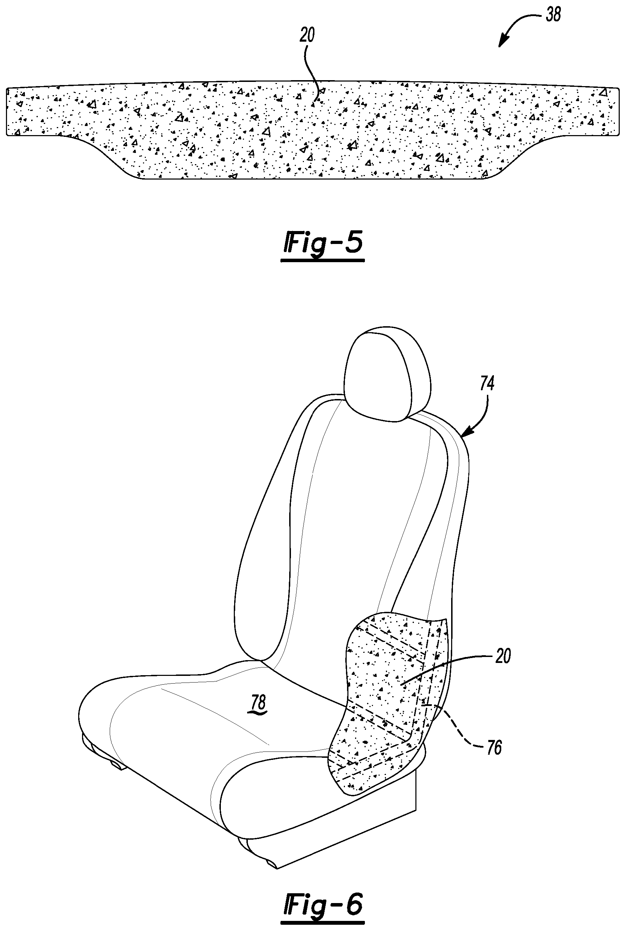

Referring to Figures 4 and 5, a seat backrest 64 is illustrated in Figure 4 and a seat cushion 66 is illustrated in Figure 5 that include a soft zone 68, or region, and three different hard zones, or regions, 70, 72, and 74 of different hardness values. The hardness of the soft zone, for example, is 1.2 kPA and the apparent/bulk density is 1.8 kg/m³. The three different hard zones have a hardness ranging from 1.2 kPA to 23.1 kPA and the apparent/bulk density ranging from 1.8 kg/m³ to 5.8 kg/m³.

Referring to Figure 6, a vehicle seat assembly 74 is illustrated that comprises a seat frame 76, a seat cover 78, a seat backrest cushion 64 and a seat base cushion 66. The seat frame 76 and cover 78 are provided in a wide range of styles and designs. The seat backrest cushion 64 and the seat base cushion 66 are polymer filaments formed first into the preform strip 12 that is divided into separate cushions or seat pads and molded to shape before being assembled to the vehicle seat assembly 74. The preform strip 12 is divided into a plurality of seat backrest cushions 64, or seat base cushions 66, that are assembled each to one of a plurality of seat frames 76 and covered by one of a plurality of seat covers 78.

An article comprising a body of a plurality of extruded polymer filaments 14 randomly oriented and bonded together to form a three-dimensional mesh structure 12, wherein the body 12 is elongated in a longitudinal direction and comprises first zones 42 comprising the extruded polymer filaments 14 comprising a first apparent/bulk density and second zones 46 comprising the extruded polymer filaments 14 comprising a second apparent/bulk density less than the first apparent/bulk density.

The article described in the preceding paragraph can include one or more of the following additional features:

The article according to one or more of the above clauses comprising the first zones 42 and second zones 44 define at least one boundary 48, or transition areas, between the first zones 42 and the second zones 44 that extends at least partially across the body 12.

The article according to one or more of the above clauses comprising first zones 42 and second zones 44 define at least one boundary 48 between the first zones and the second zones that extends fully across the body 12.

The article according to one or more of the above clauses comprising at least one boundary 48 between the first zones 42 and the second zones 44 that extends at an angle that is less than perpendicular relative to the longitudinal direction that the body is moved.

The article according to one or more of the above clauses comprising at least one boundary 48 between the first zones 42 and the second zones 44 is curved.

The article according to one or more of the above clauses comprising body 12 comprises a plurality of connected intermediate preforms 12 wherein each of the intermediate preforms 12 are adapted to be separated and molded into a seat cushion 64,66.

A seat assembly 64, 66 comprising a seat frame, a seat cover, and a seat backrest cushion 64 and a seat base cushion 66. The body 12 comprises a plurality of extruded polymer filaments 14 randomly oriented and bonded together to form an intermediate preform 12 comprising first zones 44 of the extruded polymer filaments 14 comprising a first apparent/bulk density and second zones 46 of the extruded polymer filaments 14 comprising the extruded polymer filaments 14 comprising a second apparent/bulk density less than the first apparent/bulk density, wherein the intermediate preform 12 is molded to form the molded backrest cushion 64 and the seat base cushion 66.

The seat assembly described in the preceding paragraph can include one or more of the following additional features:

The seat assembly according to one or more of the above clauses comprising first zones 42 and second zones 44 define at least one boundary 48, or transition area, between the first zones 42 and the second zones 44 that extends at least partially across the body 12.

The seat assembly according to one or more of the above clauses comprising first zones 42 and second zones 44 define at least one boundary 48 between the first zones 42 and the second zones 44 that extends fully across the body 12.

The seat assembly according to one or more of the above clauses comprising at least one boundary 48 between the first zones 42 and the second zones 44 is curved.

A method comprising melting a polymer resin 18 to form a molten polymer, extruding the molten polymer through a die head 22 to form extruded polymer filaments 14, shaping and bonding the extruded polymer filaments 14 into a strip of filaments 12 comprising a predetermined cross-section. The method further comprises pulling the strip of filaments 12 into a cooling tank 26 in a longitudinal direction with a plurality of tractor belts 40a-40e arrayed transverse to the longitudinal direction, wherein the tractor belts40a-40e each move one of a plurality of portions of the strip of filaments 12 in the longitudinal direction. The plurality of tractor belts 40a-40e are controlled to move one of the plurality of portions of the strip of filaments 12 at a different speed relative to the other ones of the plurality of tractor belts 40a-40e to locally control the apparent/bulk density of the plurality of portions of the strip of filaments 14 across a width of the strip of polymer filaments 12.

The method described in the preceding paragraph can include one or more of the following additional features:

The method according to one or more of the above clauses comprising the method further comprises cutting the strip of filaments 12 transverse to the longitudinal direction to form a plurality of seat cushion preforms 64,66.

The seat assembly according to one or more of the above clauses comprising method further comprises molding the plurality of seat pad preforms 64, 66 into a contoured shape of a seat cushion.

The seat assembly according to one or more of the above clauses comprising method wherein the polymer resin 18 is a thermoplastic polymer such as LLDPE or HDPE.

The seat assembly according to one or more of the above clauses comprising method further comprising assembling the strip of filaments 12 comprising a seat pad 64, 66 to a seat frame.

The seat assembly according to one or more of the above clauses comprising method further comprising covering the seat pad 64, 66 with a seat cover.

The seat assembly according to one or more of the above clauses comprising made according to the method.

While exemplary embodiments are described above, it is not intended that these embodiments describe all possible forms according to the disclosure. In that regard, the words used in the specification are words of description rather than limitation, and it is understood that various changes may be made without departing from the spirit and scope of the disclosure. Additionally, the features of various implementing embodiments may be combined to form further embodiments according to the disclosure.

## Claims

1. An article comprising:
a body of a plurality of extruded polymer filaments randomly oriented and bonded together to form a three-dimensional mesh structure, wherein the body is elongated in a longitudinal direction and comprises first zones comprising the extruded polymer filaments comprising a first density and second zones comprising the extruded polymer filaments comprising a second density less than the first density.

2. The article of claim 1 wherein the first zones and the second zones define at least one boundary between the first zones and the second zones that extends at least partially across the body.

3. The article according to claim 2 wherein the at least one boundary between the first zones and the second zones is curved.

4. The article according to claim 2 wherein the at least one boundary between the first zones and the second zones that extends at an angle that is less than perpendicular relative to the longitudinal direction.

5. The article according to any of the preceding claims, wherein the first zones and the second zones define at least one boundary between the first zones and the second zones that extends fully across the body.

6. The article according to any of the preceding claims, wherein the body comprises a plurality of intermediate preforms wherein each of the intermediate preforms are adapted to be separated and molded into a seat cushion.

7. A seat assembly comprising:
a seat frame;
a seat cover; and
a body comprising a plurality of extruded polymer filaments randomly oriented and bonded together to form an intermediate preform comprising first zones of the extruded polymer filaments comprising a first density and second zones of the extruded polymer filaments comprising the extruded polymer filaments comprising a second density less than the first density, wherein the intermediate preform is molded to form a molded seat cushion.

8. The seat assembly of claim 7 wherein the first zones and the second zones define at least one boundary between the first zones and the second zones that extends at least partially across the body.

9. The seat assembly according to claim 7 wherein the first zones and the second zones define at least one boundary between the first zones and the second zones that extends fully across the body,
wherein preferably the at least one boundary between the first zones and the second zones is curved.
